(19) Europäisches Patentamt
European Patent Office
Office européen des brevets

(11) **EP 2 447 749 B1**

(12) **EUROPEAN PATENT SPECIFICATION**

(45) Date of publication and mention
of the grant of the patent:
**04.12.2013 Bulletin 2013/49**

(51) Int Cl.:
*G02B 6/02* *(2006.01)*          *G02B 6/028* *(2006.01)*
*G01M 11/00* *(2006.01)*

(21) Application number: **11185675.3**

(22) Date of filing: **18.10.2011**

(54) **Method of selecting a multimode optical fibre insensitive to bending losses**

Verfahren zur Auswahl einer gegenüber Biegungsverlust unempfindlichen optischen Multimodenfaser

Méthode de sélection d'une fibre optique multimodale insensible aux pertes de flexion

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.10.2010 FR 1058485
27.07.2011 FR 1156877**

(43) Date of publication of application:
**02.05.2012 Bulletin 2012/18**

(73) Proprietor: **Draka Comteq B.V.
1083 HJ Amsterdam (NL)**

(72) Inventors:
• **Molin, Denis
91210 Draveil (FR)**
• **Sillard, Pierre
78150 Le Chesnay (FR)**

(74) Representative: **Algemeen Octrooi- en
Merkenbureau B.V.
P.O. Box 645
5600 AP Eindhoven (NL)**

(56) References cited:
WO-A2-2010/036684          JP-A- 2006 047 719
US-A- 4 715 695          US-A1- 2009 169 163

• **DENIS MOLIN ET AL: "Low bending sensitivity of
regular OM3/OM4 fibers in 10GbE applications",
OPTICAL FIBER COMMUNICATION (OFC),
COLLOCATED NATIONAL FIBER OPTIC
ENGINEERS CONFERENCE, 2010 CONFERENCE
ON (OFC/NFOEC), IEEE, PISCATAWAY, NJ, USA,
21 March 2010 (2010-03-21), pages 1-3,
XP031677150,**

EP 2 447 749 B1

**Description**

The present invention relates to the field of transmission by optical fiber, and more specifically to a multimode optical fiber that is insensitive to bending losses.

An optical fiber (or fiber) is conventionally made up of an optical core having the function of conveying and optionally amplifying an optical signal, and an optical cladding having the function of confining the optical signal in the core. For this purpose, the refractive indices (or indices) of the core $n_c$ and of the cladding $n_g$ are such that $n_c > n_g$.

The term "index profile" designates the graph of the function that associates the refractive index with the radius of the optical fiber. Conventionally, the distance from the center of the optical fiber is plotted along the abscissa and the difference between the refractive index of the optical fiber core and the refractive index of the optical fiber cladding is plotted up the ordinate. The refractive index profile is generally described as a function of its shape. The terms "step", "trapezoidal", "triangular", or "alpha" are thus used to describe the refractive index profile for graphs that present shapes that are respectively step-shaped, trapezoidal, triangular, or graded. These curves are representative of the theoretical or design profile for the optical fiber, and fiber fabrication constraints may lead to a profile that is slightly different.

There exist two main types of optical fiber, multimode fibers and monomode fibers. In a multimode fiber, for a given wavelength, a plurality of optical modes propagate simultaneously along the optical fiber, whereas in a monomode fiber, higher order modes are strongly attenuated. The typical diameter of a monomode or multimode optical fiber is 125 micrometers ($\mu$m). The core of a multimode fiber typically has a diameter of 50 $\mu$m or of 62.5 $\mu$m, while the core of a monomode fiber generally presents a diameter of about 6 $\mu$m to 9 $\mu$m. Multimode systems are less expensive than monomode systems, since sources, connectors, and maintenance are less expensive.

Multimode fibers are commonly used for short-distance applications requiring broad bandwidth, such as local networks. They are the subject of international standardization under ITU-T standard G.651.1, which defines in particular criteria concerning bandwidth, numerical aperture, and core diameter, for compatibility requirements between optical fibers. The OM3 standard has been adopted for broadband applications (typically at 10 gigabits per second (Gb/s)) over long distances (up to 300 meters (m)). With the development of broadband applications, mean core diameter has gone from 62.5 $\mu$m to 50 $\mu$m.

In order to be usable in a broadband application, an optical fiber must present bandwidth that is as broad as possible. Bandwidth is characterized for a given wavelength in several ways. Thus, a distinction is made between the bandwidth under saturated injection conditions known as "overfilled launch" (OFL), and "effective modal bandwidth" (EMB). Acquiring the OFL bandwidth assumes that a light source is used that presents excitation that is uniform over the entire radial surface of the optical fiber, e.g. a laser diode or a light-emitting diode (LED). However, recently developed light sources that are used in broadband applications, known as vertical cavity surface emitting laser (VCSELs) present excitation that is non-uniform (inhomogenous) over the radial surface of the optical fiber. With this type of light source, the OFL bandwidth is less pertinent and it is preferred to use the effective modal bandwidth EMB as it allows for the non-uniform excitation by the source.

Calculated effective modal bandwidth, EMBc, estimates the minimum EMB of a multimode fiber regardless of the source that is used. It is obtained in known manner from a measurement of dispersion mode delay (DMD).

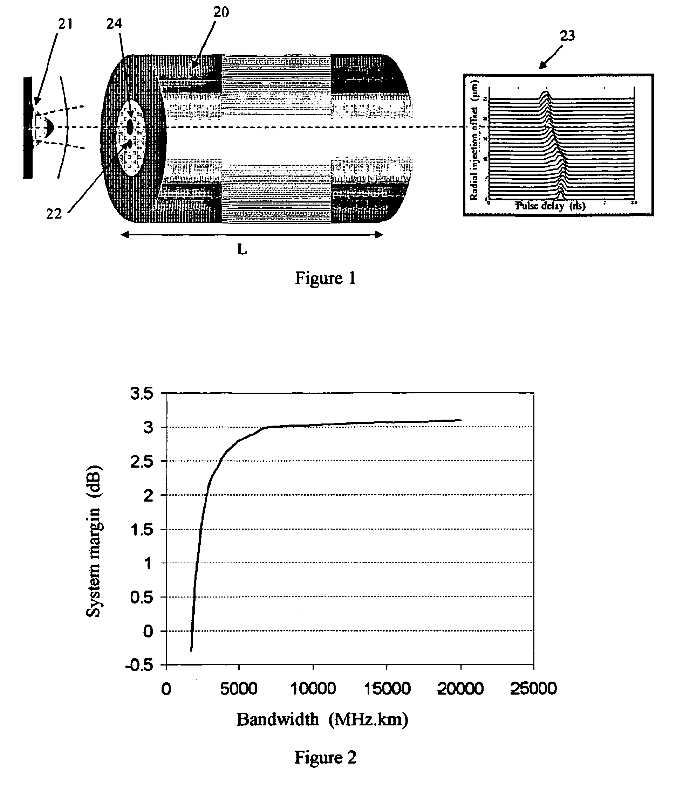

Figure 1 shows the principle of DMD measurements using the criteria of the FOTP-220 standard as published in its TIA SCFO-6.6 version of November 22, 2002. The DMD measurements for the present invention have been carried out using these criteria. A DMD graphic is obtained by injecting into the optical fiber 20 successive light pulses 21 at a given wavelength $\lambda_0$ with a radial offset between each successive pulse, and by measuring the delay for each pulse over a given length L of fiber. The same light pulse 21 is injected with different radial offsets 24 relative to the center 22 of the core of the multimode optical fiber. In order to characterize an optical fiber having a diameter of 50 $\mu$m, the FOTP-220 standard requires twenty-six (26) individual measurements to be taken, each at a different radial offset. On the basis of those measurements, it is possible to deduce both a map 23 of DMD (a DMD graph), and the calculated effective modal bandwidth EMBc, in known manner.

The standard TIA-492AAAC-A standardizes the performance required for applications to broadband Ethernet transmission networks over long distances for multimode fibers having a diameter of 50 $\mu$m. The OM3 standard guarantees an EMB greater than or equal to 2000 megahertz-kilometers at a wavelength of 850 nanometers (2000 MHz.km at the wavelength 850 nm) in order to obtain error-free transmission at a rate of 10 Gb/s (e.g. 10 gigabits Ethernet (GbE)) up to 300 m. The OM4 standard guarantees an EMB greater than or equal to 4700 MHz.km at the wavelength 650 nm in order to obtain error-free transmission at a rate of 10 Gb/s (10 GbE) up to 550 m.

However, in a multimode fiber, the bandwidth results from the propagation time differences or group times between modes along the optical fiber. In particular, for a given propagation medium (in a step index multimode fiber), the various modes have group times that are different.

This leads to time offsets between pulses propagating along the optical fiber. For example, in Figure 1, there can be seen a time offset between the individual pulses.

This causes the resulting light pulse to be spread out, and runs the risk of superposing it on a following pulse, thereby reducing the rate that can be conveyed by the optical fiber. Bandwidth is therefore directly linked to the group times of the light modes propagating in the multimode core of the optical fiber.

In order to guarantee a broad bandwidth, it is necessary for the group times of all of the modes to be as close together as possible, and preferably identical, i.e. to guarantee that dispersion between modes (intermodal dispersion) is zero or at least minimized, for a given wavelength.

In order to diminish dispersion between modes in a multimode fiber, proposals have been made to produce graded index fibers with an "alpha" core profile. Such an optical fiber has been in use for many years and its characteristics are described in particular in "Multimode theory of graded-core fibers", by D. Gloge et al., Bell System Technical Journal 1973, pp. 1563-1578, and summarized in "Comprehensive theory of dispersion in graded-index optical fibers", by G. Yabre, Journal of Lightwave Technology, February 2000, Vol. 18, No. 2, pp. 166-177.

A graded-index profile or alpha-index profile - these two terms are equivalent - is a refractive index profile having a alpha shaped index profile or graded index. These profiles may be defined by a relationship giving the value $\underline{n}$ of the index at a point as a function of the distance r of said point from the center of the optical fiber:

$$ n = n_1 \sqrt{1 - 2\Delta \left( \frac{r}{a} \right)^{\alpha}} $$

where:

α (alpha ≥ 1; (α → ∞ corresponding to an index step);
$n_1$ maximum index of the multimode core;
a the radius of the multimode core; and

$$ \Delta = \frac{\left( n_1^2 - n_0^2 \right)}{2 n_1^2} $$

where $n_0$ is the minimum refractive index of the multimode core, generally corresponding to the index of the cladding (usually made of silica).

A graded-index multimode fiber thus presents a symmetric core profile, such that along any radial direction the value of the refractive index decreases continuously from the center of the optical fiber towards its periphery. When a multimode light signal propagates in such a graded-index core, the various modes see different propagation media, thereby affecting their propagation speeds differently. By adjusting the value of the parameter a, it is thus possible to obtain group times for all of the modes that are practically equal, and thus to obtain reduced dispersion between modes.

However, the refractive index profile (or profile) of a multimode fiber as actually produced comprises a central core with a graded index surrounded by outer cladding of constant refractive index. Thus, the core of the multimode fiber never corresponds to a perfect alpha profile since the interface with the outer cladding interrupts the alpha profile. The outer cladding accelerates higher-order modes compared with lower-order modes. This phenomenon is known as the "cladding effect". In DMD measurements, the responses acquired for the largest radial offsets thus present multiple pulses, giving rise to the resulting response being spread in time. Bandwidth is necessarily diminished by this cladding effect.

When used over short distances, for example in a local area network (LAN), high-bandwidth multimode fibers may suffer fortuitous bending. Such bending induces attenuation of the signal and thus degrades the signal-to-noise ratio. It is therefore beneficial to design a multimode fiber that is insensitive to bending.

One solution is to use a 10 GbE source and to apply conditions for injection into the optical fiber enabling transmission that is insensitive to bending. However, that solution has the constraint that it is not always possible to select such a source.

Documents US-A-2008/0166094 and WO-A-2008/085851 describe a multimode fiber in which a buried trench is added in the cladding of the optical fiber in order to reduce or eliminate bending losses. The bending to which the optical fiber is subjected does not generate any attenuation of the signal. However, the position and the depth of the trench must be selected carefully in order not to degrade the bandwidth.

The publication "Low bending sensitivity of regular OM3/OM4 in 10-GbE applications" by D. Molin and P. Sillard in Proc. Optical Fiber Communication Conference, JThA55 (2010) defines the system margin M for a system including an optical fiber, which margin depends on the effective modal bandwidth. The system margin M characterizes the loss of optical energy of the incident signal caused by modal dispersion in the optical fiber or the time shifts of the higher order modes for a given modal bandwidth. The document discloses an optical fiber in which the modal bandwidth is increased by bending the optical fiber, thus improving the system margin M. However, this publication does not describe an optical fiber that is insensitive to bending.

Document EP-A-2 166 386 describes a multimode optical fiber that is insensitive to bending and that includes a buried trench. The optical fiber presents a bandwidth that does not vary with the bending to which it is subjected because all modes are resistant to bending. However, the insensitivity to bending is obtained for an optical fiber having a large trench volume. A large trench volume implies deleterious effects on the optical fiber. Large quantities of dopants are necessary to obtain a wide trench, which complicates fabrication of the optical fiber. Moreover, the trench interferes with the bandwidth and guides leakage modes, thereby reducing the quality of the transmitted signal. Those effects can be compensated only by an optical fiber profile that is highly complex.

Document US-A-2009/0010596 describes a multimode fiber in which the higher order modes are filtered to achieve transmission insensitive to bending. However, filtering the bending losses may lead to a loss of quality of the transmitted optical signal.

There is therefore a requirement for a multimode optical fiber that enables transmission without bending degrading the optical signal, and that is free of the disadvantages associated with a trench of large volume.

To this end, the invention provides a method of selecting from a plurality of multimode optical fibers one or more multimode optical fibers in which respective modal bandwidths depend on the bending to which the optical fibers are subjected, the method comprising steps defined in claim 1.

In one implementation said bandwidth threshold A satisfies the following equation:

$$A = \frac{BW}{(1 - BL \times D)^{1/\alpha}}$$

where:

· A is said bandwidth threshold;
· BW is the first modal bandwidth value of the optical fiber when the optical fiber is not bent;
· BL is said predetermined bending loss value;
· D is a value that is a function of the first modal bandwidth value BW of the optical fiber when the optical fiber is not bent; and
· $\alpha$ is a constant.

In one implementation, the value D satisfies the following equation, in which F is a constant:

$$D = \frac{BW^\alpha}{F}$$

In one implementation the constant F is equal to $2 \times 10^8$.
In one implementation the constant $\alpha$ is equal to 2.4.
In one implementation the method further includes, before the step of determining the first modal bandwidth value BW, a step of preselecting from said plurality of optical fibers optical fibers for which the bending losses of the optical fiber when it is bent are above a predetermined threshold.
In one implementation the bending to which the optical fiber is subjected consists of two turns with a radius of 5 mm.
In one implementation the bending losses at the wavelength 850 nanometers (nm) are greater than 0.5 decibels (dB), preferably greater than 0.8 dB.
In one implementation the method further includes, after the step of determining the first modal bandwidth value BW, a step of selecting optical fibers for which the first modal bandwidth value BW of the optical fiber is less than 3150 MHz.km at the wavelength 850 nm.
In one implementation said bandwidth threshold A is equal to 4000 MHz.km at the wavelength 850 nm.
In one implementation said bandwidth threshold A is equal to 5000 MHz.km at the wavelength 850 nm.
In one implementation said bandwidth threshold A is equal to 6000 MHz.km at the wavelength 850 nm.
In one implementation the modal bandwidth and the bending losses are respectively an effective modal bandwidth and bending losses under restricted injection conditions.

In one implementation the modal bandwidth and the bending losses are respectively a bandwidth under saturated injection conditions and bending losses under saturated injection conditions.

The multimode optical fiber comprises:

· a central core having a radius $r_1$ and optical cladding, the optical cladding comprising:

· an inner cladding adjacent the central core and having a radius $r_2$ and having a difference between the radius $r_2$ of the inner cladding and the radius $r_1$ of the central core, mathematically depicted as $r_2$-$r_1$, which is in the range 0.8 $\mu$m to 5 $\mu$m;

· a trench adjacent the inner cladding and having a radius $r_3$ and a volume V in the range -30 $\mu$m to -2 $\mu$m given by the following expression, in which $\Delta n_t$ is the refractive index difference of the trench with respect to the outer cladding as a function of the radius r where r corresponds to the radial distance with respect to the centre of the optical fiber:

$$V = \int_{r2}^{r3} \Delta n_t \times 1000 \times dr$$

in which the modal bandwidth depends on the bending to which the optical fiber is subjected; wherein the modal bandwidth value bBW when the optical fiber is bent is above a bandwidth threshold A, said threshold A being above the first value BW and being a function of:

· the value BW of the modal bandwidth when the optical fiber is not bent; and
· a predetermined bending loss value BL.

In one embodiment said threshold A satisfies the following equation:

$$A = \frac{BW}{(1 - BL \times D)^{1/\alpha}}$$

where:

· A is said bandwidth threshold;
· BW is the modal bandwidth value of the optical fiber when the optical fiber is not bent;
· BL is the predetermined bending loss value;
· D is a value that is a function of the modal bandwidth value BW of the optical fiber when the optical fiber is not bent; and
· $\alpha$ is a constant.

The value D may satisfy the following equation, in which F is a constant:

$$D = \frac{BW^\alpha}{F}$$

F may be equal to $2 \times 10^8$.

$\alpha$ may be equal to 2.4.

The volume V of the trench may be in the range -20 $\mu$m to -10 $\mu$m. The difference between the radius $r_2$ of the inner cladding and the radius $r_1$ of the central core (viz. the width of the inner cladding) may be in the range 0.8 $\mu$m to 2 $\mu$m.

The bending losses of the optical fiber with two turns with a bend radius of 5 millimeters (mm) for a signal of wavelength 850 nm may be greater than 0.5 dB, preferably greater than 0.8 dB.

The modal bandwidth value BW when the optical fiber is not bent may be less than 3150 MHz.km at the wavelength 850 nm.

The modal bandwidth value bBW at the wavelength 850 nm with two turns of optical fiber with a bend radius of 5 mm may be greater than 4000 MHz.km, preferably greater than 5000 MHz.km, more preferably greater than 6000 MHz.km.

The modal bandwidth and the bending losses may be respectively an effective modal bandwidth and bending losses under restricted injection conditions.

The modal bandwidth and the bending losses may be respectively a bandwidth under saturated injection conditions and bending losses under saturated injection conditions.

The invention also provides an optical fiber as a transmission medium in an optical fiber to the home (FTTH) system.

In the optical fiber obtained by the method of the invention, the modal bandwidth value (the effective bandwidth or the bandwidth under saturated injection conditions) when the optical fiber is bent is above a threshold that is a function both of the value of the modal bandwidth when the optical fiber is not bent and of a predetermined bending loss value.

Thus the modal bandwidth of the optical fiber when it is bent is sufficiently high to compensate the bending losses of the optical fiber. In other words, if the optical fiber is bent, the corresponding bending losses imply a reduction of power. However, the bending losses are compensated by an increase in the modal bandwidth. Thus the quality of the signal transmitted by the optical fiber is globally insensitive to bending losses. The signal-to-noise ratio is globally constant or even improved.

Other features and advantages of the invention become apparent on reading the following description of embodiments of the invention given by way of example and with reference to the appended drawings, in which:

· Figure 1, already described, is a diagram illustrating the theory of DMD measurements;
· Figure 2 is a graph showing the system margin as a function of bandwidth of a system including a multimode optical fiber;
· Figure 3 shows power distributions of signals emitted by the same source and transmitted via an optical fiber with different injection radial offsets as a function of the propagation modes of the optical fiber, when the optical fiber is not bent;
· Figure 4 shows power distributions of signals emitted by different examples of sources and transmitted via an optical fiber as a function of the propagation modes, when the optical fiber is not bent;
· Figure 5 shows power distributions of signals emitted by the same source and transmitted via an optical fiber with different radial injection offsets as a function of the propagation modes of the optical fiber, when the optical fiber is bent;
· Figure 6 shows power distributions of signals emitted by the same examples of sources as in Figure 4 and transmitted via an optical fiber as a function of the propagation modes, when the optical fiber is bent;
· Figure 7 shows DMD measures acquired on a selected optical fiber using a method of the invention;
· Figure 8 shows DMD measures acquired on another selected optical fiber using a method of the invention;
· Figure 9 shows DMD measures acquired on a non-selected optical fiber using a method of the invention;
· Figure 10 is a flowchart showing the steps of a method of one particular embodiment of the invention;
· Figure 11 is a schematic representation of the transverse cross-section of an optical fiber having a complex index profile.

The quality of the signal transmitted by an optical system including a multimode optical fiber may be defined by the system margin M of the optical system as a function of the modal bandwidth. In particular, the system margin M of the optical system as a function of the bandwidth of an optical link having a bit rate of 10 Gb/s over 300 m and including a multimode fiber may be defined by the following equation, in which BP is the modal bandwidth of the multimode fiber:

$$M = 3.1 - \frac{2 \times 10^8}{BP^{2.4}}$$

The above expression for the system margin M is obtained from the 10 Gb/s Link Budget Spreadsheet developed by the IEEE P802.3ae 10 Gb/s Ethernet Task Force.

Figure 2 shows the evolution in the system margin M of a link having a bit rate of 10 GbE over 300 m as a function of the modal bandwidth. The system margin M is expressed in decibels (dB). The modal bandwidth is expressed in MHz.km. The higher the system margin M, the better the quality of the transmitted signal. In other words, the higher the margin, the lower the attenuation of the signal associated with the bandwidth.

It is seen in Figure 2 that the system margin increases with the modal bandwidth up to a plateau: for a bandwidth value in the range 0 MHz.km to approximately 6000 MHz.km, the system margin increases up to a value of approximately 3 dB and then, for bandwidths exceeding approximately 6000 MHz.km, the system margin is substantially stabilized at a value of 3.1 dB. Increasing the bandwidth can therefore improve the signal transmitted in the optical fiber.

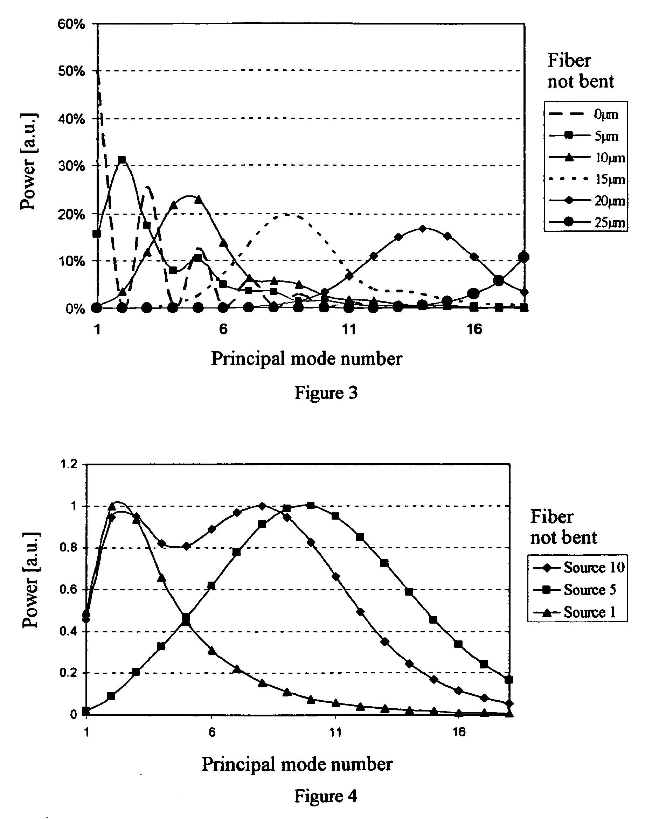

Moreover, the modal bandwidth of a multimode optical fiber may be a function of the bending of the optical fiber. The bandwidth may be limited by time shifts of the higher order modes. If the optical fiber is bent, the time shifts are unchanged. However, the higher order modes are attenuated, leading to an increased bandwidth in this situation. This is made clear by Figures 3 to 6. The curves shown in Figures 3 to 6 were acquired at a wavelength of 850 nm.

Figure 3 represents the power distributions in the various mode groups for different radial injection offsets produced during DMD measurements, referred to below as DMD power distributions. The power is expressed in arbitrary units (a.u.). The Figure 3 curves were acquired with the optical fiber straight and not bent. Each curve was obtained for a signal emitted by the same source with a different radial injection offset. In a multimode fiber, the propagation modes of the transmitted signal are organized in mode groups. Each mode group is designated by a principal mode number or order. Figure 3 shows on the abscissa axis the principal mode number of the propagation modes inherent to the optical fiber. It is seen that for radial offsets of 15 $\mu$m to 25 $\mu$m the higher order modes constitute the greater part of the transmitted signal. These higher order modes may have different propagation speeds and if so the DMD measurements obtained for the radial offsets of 15 $\mu$m to 25 $\mu$m therefore represent a spread signal. In other words, the time shifts of the higher order modes of the optical fiber may be non-negligible and reduce the modal bandwidth of the optical fiber.

The modal power distribution corresponding to a particular source is obtained from the DMD power distribution. Figure 4 shows modal power distributions for different examples of sources (source 1, source 5, and source 10).

These modal power distributions are obtained from a weighted sum of the Figure 3 curves. It is seen that the source 1 concentrates the transmitted signal in the lower order modes, while with the source 5 a major part of the signal is in the higher order modes. The sources are not equivalent insofar as the power modal distribution is concerned. The source 5 is more sensitive to the time shifts of the higher order modes, which may limit the modal bandwidth corresponding to this source 5.

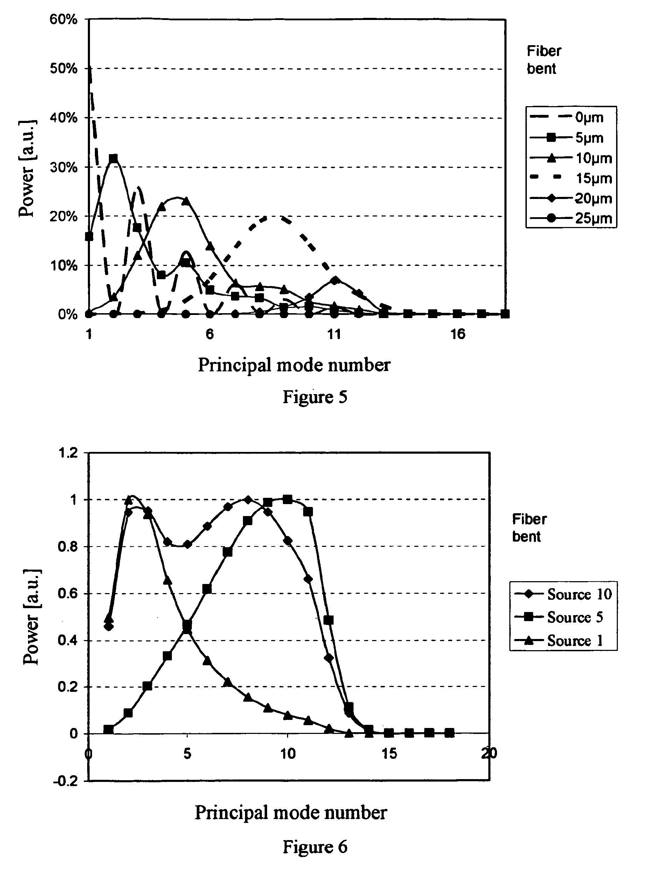

Figure 5 shows DMD power distributions of signals transmitted via the multimode optical fiber when it is bent, in other words in a state where it is subjected to bending. In the example shown in Figure 5, the optical fiber is subjected to two turns with a bend radius of 5 mm. The signals are emitted by the same source with different radial offsets. It is seen that the higher order modes are strongly attenuated. This is reflected in the virtual absence of signal for the higher injection radial offsets. For a radial offsets of 20 $\mu$m to 25 $\mu$m, for example, the signal transmitted is very weak. In a bent optical fiber, the higher order modes may therefore be filtered. Thus the modal bandwidth is not influenced by the time shifts of the higher order modes.

Figure 6 shows modal power distributions for the same examples of sources as Figure 4 when the multimode fiber is subjected to two turns with a bend radius of 5 mm. It is seen that whatever the source used, the signal transmitted is concentrated in the lower order modes. Bending the optical fiber filters modes of order higher than 15. With the higher order modes being filtered, the proportion of higher order modes in the time response of the optical fiber is greatly diminished. If it is only these higher order modes that limit the bandwidth of the optical fiber, i.e. if all the other modes have substantially equal group delay times, then the modal bandwidth is increased whichever source is used.

Thus the bandwidth may be increased as a function of the bending to which the optical fiber is subjected. The system margin M may thus be improved as a function of the bending to which the optical fiber is subjected.

Accordingly, if an optical fiber is bent, the modal bandwidth may be increased sufficiently to compensate bending losses, at least in part.

In other words, if the optical fiber is bent sharply, its modal bandwidth changes and this leads to an increase in the system margin M of the system including the optical fiber. This increase in the system margin M is limited by a plateau. The maximum increase of the system margin M corresponds to a budget for bending losses that may be compensated. This budget is compared with the bending losses actually induced.

If the bending losses actually induced are greater than this budget, then the bending losses are only partially compensated. The signal-to-noise ratio is degraded.

If the bending losses actually induced are equal to the budget, then the bending losses are compensated. The signal-to-noise ratio is not degraded and remains substantially constant.

If the bending losses actually induced are less than the budget, they are overcompensated. The performance of the system is even improved. The signal-to-noise ratio is improved.

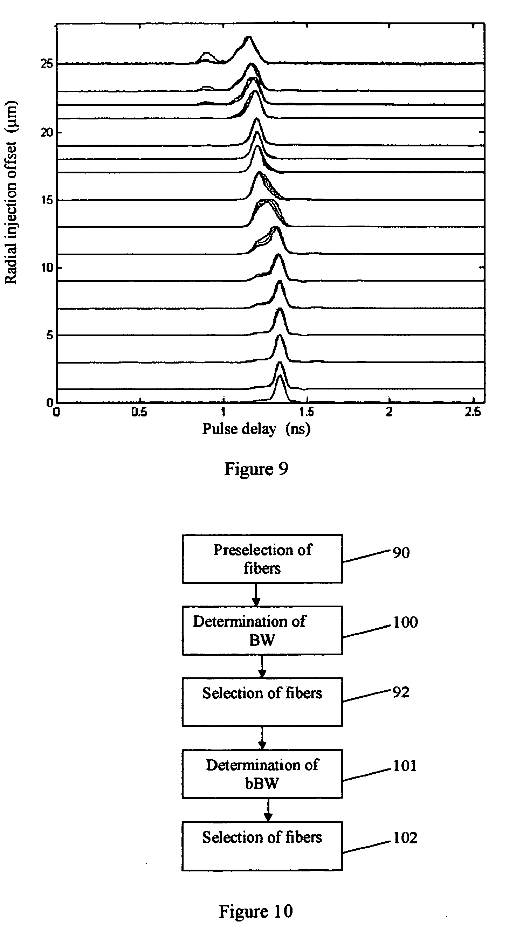

The method of the invention makes it possible to select optical fibers making possible a constant or improved signal-to-noise ratio. Figure 10 shows the main steps of a method of one particular embodiment of the invention for selecting one or more multimode optical fibers from a plurality of multimode optical fibers.

The method of the invention includes a step 100 of determining a first modal bandwidth value BW for each optical fiber when the optical fiber is not bent. The optical fiber is not bent if it is kept straight. For example, the optical fiber is straight when it has a bend radius greater than 100 mm with a tension of less than 50 grams-force (gf) applied to the optical fiber.

The method then includes a step 101 of determining a second modal bandwidth value bBW for each optical fiber when the optical fiber is bent. The bends consist of two turns with a radius of 5 mm, for example. In another example, the bends consist of two turns with a radius of 7.5 mm. In a further example, the bends consist of five turns with a radius of 5 mm. In a further example, the bends consist of five turns with a radius of 7.5 mm, for example.

The method then includes a step 102 of selecting optical fibers for which the second value bBW is above a bandwidth threshold A. The threshold A is above the first modal bandwidth value BW. The threshold A depends on a predetermined bending loss value BL. The value BL is greater than zero and corresponds to maximum bending losses permitted when the optical fiber is bent. The permitted maximum bending losses BL are given for example by the specifications of the optical system in which the optical fiber is to be used. In other words, in the optical system in which the optical fiber is to be used, the optical fiber has bending losses less than or equal to the value BL. The threshold A also depends on the first modal bandwidth value BW of the optical fiber when it is not bent, i.e. when the optical fiber is held straight.

The method of the invention makes it possible to determine optical fibers in which, when the optical fibers are bent, the corresponding bending losses are compensated, or even overcompensated, by an increase in the modal bandwidth. Bending loss compensation is possible if the modal bandwidth bBW of the optical fiber when it is bent is above a bandwidth threshold A.

Thus the method of the invention makes it possible to select from a plurality of multimode optical fibers those for which, if the optical fiber is bent, the modal bandwidth is sufficiently increased to compensate bending losses.

In optical fibers obtained by the method of the invention, the quality of the signal, i.e. the signal-to-noise ratio of signals transmitted via the optical fiber, is globally insensitive to bending.

In the method of one particular implementation of the invention, the threshold A satisfies the following equation:

$$A = \frac{BW}{(1 - BL \times D)^{1/\alpha}}$$

where:

· A is said bandwidth threshold;
· BW is the first modal bandwidth value of the optical fiber when the optical fiber is not bent;
· BL is said predetermined bending loss value;
· D is a value that is a function of the first modal bandwidth value BW of the optical fiber when the optical fiber is not bent; and
· $\alpha$ is a constant.

In one particular implementation, the value D satisfies the following equation, in which F is a constant:

$$D = \frac{BW^{\alpha}}{F}$$

In particular, the threshold A may be obtained from the 10 ·Gb/s Link Budget Spreadsheet developed by the IEEE P802.3ae 10 Gb/s Ethernet Task Force and the definition of the system margin. Note that this particular method of obtaining the threshold A is provided by way of non-limiting example.

A system including an optical fiber is considered insensitive to bending if the system margin of the system including the optical fiber when the optical fiber is bent is greater than the margin of the system including the optical fiber when it is not bent, taking into account the maximum bending losses BL permitted for the optical fiber.

Thus, in this implementation of the invention, the optical fiber selected by the invention satisfies the following condition:

$$3.1 - \frac{2x10^8}{bBW^{2.4}} - BL > 3.1 - \frac{2x10^8}{BW^{2.4}}$$

Thus an optical fiber selected from the plurality of optical fibers enables transmission that is insensitive to bending providing the second modal bandwidth value bBW is above the threshold A when $F = 2 \times 10^8$ and $\alpha = 2.4$.

In other words, in this embodiment of the invention, the step 102 of selecting one or more optical fibers from the plurality of optical fibers consists in determining whether the second modal bandwidth value bBW satisfies the following condition:

$$bBW > \frac{BW}{\left(1 - BL \times \dfrac{BW^{2.4}}{2 \times 10^8}\right)^{1\!/\!2.4}}$$

In one embodiment of the invention, the modal bandwidth is an effective modal bandwidth (EMB). The bending losses are bending losses under restricted injection conditions. Acquiring the modal bandwidth and bending losses under restricted injection conditions is particularly suitable when the optical fiber is used in an optical system in which a light source provides non-uniform excitation over the radial surface of the optical fiber. One example of such a source is a vertical-cavity surface-emitting laser (VCSEL). The injection conditions are for example those defined by the G.651.1 standard.

In another embodiment of the invention, the modal bandwidth is an OFL bandwidth under saturated injection conditions. The bending losses are the bending losses under saturated injection conditions. Acquiring the modal bandwidth and the bending losses under saturated injection conditions is particularly suitable when the optical fiber is used in an optical system in which a light source provides uniform excitation over the whole of the radial surface of the optical fiber. One example of such a light source is a laser diode or LED (light-emitting diode).

In the invention, the step 100 of determining the first modal bandwidth value BW includes carrying out dispersion mode delay (DMD) measurements on the optical fiber when it is not bent. To obtain the first modal bandwidth value BW the DMD measurements are weighted with coefficients C corresponding to when the optical fiber is not bent.

In the invention, the step 101 of determining the second value bBW consists in weighting the DMD measurements with coefficients Cb corresponding to when the optical fiber is bent. Thus the second modal bandwidth value bBW is determined without bending the optical fiber. This simplifies the selection method.

This implementation of the invention can be understood better by considering by way of example a multimode optical fiber to be coupled with a 10G-BASE-S source. 10G-BASE-S sources generally feature restricted injection, i.e. not all propagation modes of the optical fiber are excited uniformly. The effective modal bandwidth EMB generally depends on the 10G-BASE-S source to which the optical fiber is coupled. The calculated effective modal bandwidth EMBc is defined here as the minimum effective modal bandwidth of the optical fiber regardless of the source used.

Thus in this embodiment of the invention the modal bandwidth is the calculated effective modal bandwidth. The step 102 of selecting one or more optical fibers from the plurality of optical fibers then selects optical fibers for which the first value EMBc and the second value bEMBc of the calculated effective modal bandwidth satisfy the following condition:

$$bEMBc > \frac{EMBc}{\left(1 - BL \times \dfrac{EMBc^{2.4}}{2 \times 10^8}\right)^{1\!/\!2.4}}$$

The first value EMBc of the calculated effective modal bandwidth is obtained from the DMD measurements. Each predefined source has its set of coefficients C, each coefficient C corresponding to an injection radial offset. These coefficients C have been standardized. The responses of the optical fiber to ten (10) predefined sources are determined by weighting the DMD measurements by the coefficient C corresponding to each source and adding the weighted DMD measurements from the same source.

Table 1 gives examples of values of the coefficients C for each of the ten predefined sources (referred to as sources 1 to 10) and for each injection radial offset from 0 to 24 μm in steps of 1 μm.

Table 1

| Injection radial offset [$\mu$m] | Source 1 | Source 2 | Source 3 | Source 4 | Source 5 | Source 6 | Source 7 | Source 8 | Source 9 | Source 10 |
|---|---|---|---|---|---|---|---|---|---|---|
| 0 | 0 | 0 | 0 | 0 | 0 | 0 | 0 | 0 | 0 | 0 |
| 1 | 0.033023 | 0.023504 | 0 | 0 | 0 | 0.015199 | 0.016253 | 0.022057 | 0.01043 | 0.015681 |
| 2 | 0.262463 | 0.188044 | 0 | 0 | 0 | 0.12091 | 0.129011 | 0.17639 | 0.083496 | 0.124978 |
| 3 | 0.884923 | 0.634634 | 0 | 0 | 0 | 0.407702 | 0.434844 | 0.595248 | 0.281802 | 0.421548 |
| 4 | 2.009102 | 1.447235 | 0.007414 | 0.005637 | 0.003034 | 0.925664 | 0.987184 | 1.351845 | 0.65028 | 0.957203 |
| 5 | 3.231216 | 2.376616 | 0.072928 | 0.055488 | 0.029856 | 1.488762 | 1.5876 | 2.174399 | 1.130599 | 1.539535 |
| 6 | 3.961956 | 3.052908 | 0.262906 | 0.20005 | 0.107634 | 1.825448 | 1.946614 | 2.666278 | 1.627048 | 1.887747 |
| 7 | 3.694686 | 3.150634 | 0.637117 | 0.483667 | 0.258329 | 1.702306 | 1.815285 | 2.486564 | 2.044326 | 1.762955 |
| 8 | 2.644369 | 2.732324 | 1.197628 | 0.89695 | 0.458494 | 1.218378 | 1.299241 | 1.780897 | 2.29172 | 1.292184 |
| 9 | 1.397552 | 2.060241 | 1.916841 | 1.402833 | 0.661247 | 0.643911 | 0.686635 | 0.945412 | 2.280813 | 0.790844 |
| 10 | 0.511827 | 1.388339 | 2.755231 | 1.957805 | 0.826035 | 0.238557 | 0.25585 | 0.360494 | 1.937545 | 0.55938 |
| 11 | 0.110549 | 0.834722 | 3.514797 | 2.433247 | 1.000204 | 0.098956 | 0.131429 | 0.163923 | 1.383006 | 0.673655 |
| 12 | 0.004097 | 0.419715 | 3.883317 | 2.639299 | 1.294439 | 0.204274 | 0.327091 | 0.318712 | 0.878798 | 1.047689 |
| 13 | 0.000048 | 0.160282 | 3.561955 | 2.397238 | 1.613982 | 0.529982 | 0.848323 | 0.778983 | 0.679756 | 1.589037 |
| 14 | 0.001111 | 0.047143 | 2.617093 | 1.816953 | 2.50695 | 1.024948 | 1.567513 | 1.333174 | 0.81236 | 2.138626 |
| 15 | 0.005094 | 0.044691 | 1.480325 | 1.296977 | 3.164213 | 1.611695 | 2.224027 | 1.853992 | 1.074702 | 2.470827 |
| 16 | 0.013918 | 0.116152 | 0.593724 | 1.240553 | 3.572113 | 2.210689 | 2.55506 | 1.914123 | 1.257323 | 2.371764 |
| 17 | 0.02632 | 0.219802 | 0.153006 | 1.70002 | 3.618037 | 2.707415 | 2.464566 | 1.511827 | 1.255967 | 1.798213 |
| 18 | 0.036799 | 0.307088 | 0.012051 | 2.240664 | 3.329662 | 2.9388 | 2.067879 | 0.90833 | 1.112456 | 1.059264 |
| 19 | 0.039465 | 0.329314 | 0 | 2.394077 | 2.745395 | 2.73932 | 1.577111 | 0.386991 | 0.879309 | 0.444481 |
| 20 | 0.032152 | 0.268541 | 0 | 1.952429 | 1.953241 | 2.090874 | 1.056343 | 0.11176 | 0.608183 | 0.123304 |
| 21 | 0.019992 | 0.16697 | 0 | 1.213833 | 1.37762 | 1.261564 | 0.595102 | 0.014829 | 0.348921 | 0.012552 |
| 22 | 0.008832 | 0.073514 | 0 | 0.534474 | 0.494404 | 0.55214 | 0.256718 | 0.001818 | 0.15112 | 0 |
| 23 | 0.002612 | 0.021793 | 0 | 0.158314 | 0.146517 | 0.163627 | 0.076096 | 0.00054 | 0.044757 | 0 |
| 24 | 0.000282 | 0.002679 | 0 | 0.019738 | 0.018328 | 0.020443 | 0.009446 | 0 | 0.005639 | 0 |

EP 2 447 749 B1

The first effective modal bandwidth value EMBc corresponding to each source is calculated from the weighted DMD measurements in a manner known in the art. The first calculated effective modal bandwidth value EMBc is defined here as the minimum value of all the effective modal bandwidths of the sources multiplied by 1.13.

The second value bEMBc of the calculated effective modal bandwidth may be determined by weighting the DMD measurements with coefficients Cb corresponding to the optical fiber when it is bent. Thus according to the present invention the calculated effective modal bandwidth bEMBc of the bent optical fiber may be obtained without carrying out DMD measurements on the optical fiber when it is bent. This facilitates optical fiber selection.

Table 2 gives examples of values of the coefficients Cb for each of the ten predefined sources (source 1 to source 10) and for each injection radial offset from 0 to 24 μm in steps of 1 μm.

Table 2

| Infection radial offset [μm] | Source 1 | Source 2 | Source 3 | Source 4 | Source 5 | Source 6 | Source 7 | Source 8 | Source 9 | Source 10 |
|---|---|---|---|---|---|---|---|---|---|---|
| 0 | 0 | 0.028138 | 0.002551 | 0 | 0.001293 | 0 | 0.027502 | 0.033485 | 0.02446 | 0 |
| 1 | 0.033023 | 0 | 0 | 0 | 0.000621 | 0 | 0.000238 | 0 | 0.001471 | 0 |
| 2 | 0.262463 | 0.154503 | 0 | 0 | 0.000903 | 0.182093 | 0.000248 | 0 | 0 | 0.085648 |
| 3 | 0.0884923 | 0.684933 | 0.010429 | 0.002323 | 0.001388 | 0.284241 | 0.48179 | 0.828853 | 0.317819 | 0.557466 |
| 4 | 2.009102 | 1.443966 | 0.0215 | 0.000272 | 0 | 0.78756 | 0.640655 | 0.892097 | 0.442104 | 0.440988 |
| 5 | 3.231216 | 2.356534 | 0.030367 | 0.005174 | 0.001406 | 1.520111 | 1.126889 | 1.475559 | 0.850026 | 1.353632 |
| 6 | 3.961956 | 3.112897 | 0.104842 | 0.429298 | 0.183667 | 1.54768 | 1.662869 | 2.956761 | 1.603881 | 2.036097 |
| 7 | 3.694686 | 3.140573 | 0.887269 | 0.047724 | 0 | 1.357957 | 0.1261186 | 1.514233 | 1.362334 | 0.913113 |
| 8 | 2.644369 | 2.724777 | 0.231595 | 0.584602 | 0.216017 | 1.443303 | 1.105849 | 1.298356 | 1.683349 | 0.886987 |
| 9 | 1.397552 | 2.150405 | 2.257429 | 2.136491 | 1.072384 | 0.400341 | 0.452409 | 1.327938 | 2.446713 | 1.500928 |
| 10 | 0.511827 | 1.319808 | 2.106762 | 0.878218 | 0 | 0 | 0 | 0 | 1.123154 | 0 |
| 11 | 0.110549 | 0.790618 | 1.422348 | 0.946533 | 0 | 0 | 0 | 0 | 0.503126 | 0 |
| 12 | 0.004097 | 0.589647 | 5.044105 | 4.592444 | 2.760172 | 1.177714 | 1.024579 | 0.157154 | 2.082409 | 1.463809 |
| 13 | 0.000048 | 0 | 1.476601 | 1.422809 | 1.378172 | 0 | 0.779882 | 1.767951 | 0.071793 | 2.278489 |
| 14 | 0.001111 | 0 | 2.11325 | 0 | 0 | 0 | 0 | 0 | 0 | 0 |
| 15 | 0.005094 | 0 | 1.688557 | 0 | 0 | 0 | 0 | 0.458354 | 0 | 1.672927 |
| 16 | 0.013918 | 0.676772 | 0.030671 | 5.190242 | 8.991056 | 6.374081 | 6.532025 | 4.364617 | 3.866468 | 4.815874 |
| 17 | 0.02632 | 0 | 0 | 1.162318 | 1.196531 | 3.021792 | 0.541182 | 0 | 0 | 0 |
| 18 | 0.036799 | 0 | 0 | 0 | 0 | 0 | 0 | 0 | 0 | 0 |
| 19 | 0.039465 | 0 | 0 | 0 | 0 | 0 | 0 | 0 | 0 | 0 |
| 20 | 0.032152 | 0 | 0 | 0 | 0 | 0 | 0 | 0 | 0 | 0 |
| 21 | 0.019992 | 0 | 0 | 0 | 0 | 0 | 0 | 0 | 0 | 0 |
| 22 | 0.008832 | 0 | 0 | 0 | 0 | 0 | 0 | 0 | 0 | 0 |
| 23 | 0.002612 | 0 | 0 | 0 | 0 | 0 | 0 | 0 | 0 | 0 |
| 24 | 0.000282 | 0 | 0 | 0 | 0 | 0 | 0 | 0 | 0 | 0 |

The coefficients Cb may be obtained from DMD measurements carried out on the optical fiber when it is not bent. When the optical fiber is bent the higher order modes are filtered. The effect of the bending losses on the DMD measurements may be modeled. In particular, it is possible to model the DMD power distributions that would be obtained for each injection radial offset if the optical fiber were bent on the basis of the DMD measurements acquired from the optical fiber when it is not bent. It is possible to modify the coefficients C to obtain the coefficients Cb corresponding to the bent optical fiber from the power distributions for each source when the multimode optical fiber is bent. The bends comprise two turns with a bend radius of 5 mm, for example.

In one implementation of the invention, the coefficients Cb depend on the refractive index profile of the optical fiber. This applies in particular when the optical cladding of the optical fiber includes a trench to improve its bending resistance.

In one implementation of the invention, the method further includes - before the step 100 of determining the first value BW of the modal bandwidth - a step 90 of preselecting optical fibers for which the bending losses of the optical fiber when it is bent are above a given threshold. This step 90 makes it possible to preselect optical fibers in which the bending losses are sufficiently high to filter the higher order modes, enabling significant variation in the modal bandwidth.

For example, the step 90 preselects optical fibers with bending losses greater than 0.5 dB, preferably greater than 0.8 dB, for two turns with a bend radius of 5 mm and a signal wavelength of 850 nm.

For example, the step 90 preselects optical fibers with bending losses greater than 0.2 dB, or even greater than 0.3 dB, and even greater than 0.5 dB, for two turns with a bend radius of 7.5 mm and a signal wavelength of 850 nm.

For example, the step 90 preselects optical fibers with bending losses greater than 1 dB for two turns with a bend radius of 7.5 mm and a signal wavelength of 850 nm.

The method of one particular implementation of the invention further includes - after the step 100 of determining the first modal bandwidth value BW - a step 92 of selecting optical fibers for which the first modal bandwidth value BW of the optical fiber (i.e. the value when the optical fiber is straight) is less than 3150 MHz.km at the wavelength 850 nm. This step 92 makes it possible to select optical fibers suitable for use in a system conforming to the OM3 and OM4 standards.

A multimode optical fiber usable under the OM3 and OM4 standards (the specifications of these standards include a core diameter of 50 $\mu$m and a numerical aperture (NA) equal to 0.200+/-0.015) is typically coupled to a 10G-BASE-S source (which conforms to the 10GbE standard) operating in an optical system in the range 840-860 nm.

The bending losses may then reach approximately 1.5 dB for five turns with a bend radius of 5 mm. For five turns with a bend radius of 7.5 mm the bending losses may reach 0.8 dB. For two turns with a bend radius of 5 mm the bending losses may reach approximately 1.2 dB. For two turns with a bend radius of 7.5 mm the bending losses may reach 0.6 dB. The losses for a bend radius of 7.5 mm are typically half those for a bend radius of 5 mm.

A multimode fiber usable under the OM3 and OM4 standards coupled to a 10G-BASE-S source has maximum bending losses BL equal to 1.5 dB in the worst case.

It is clear from Figure 2 that to increase the modal bandwidth to compensate the bending losses it is necessary, if the optical fiber is not bent, for the modal bandwidth to have a sufficiently low system margin. In other words, the system margin must be below 3.1-BL. Thus for a maximum bending loss value BL equal to 1.5 dB, the modal bandwidth is less than 3150 MHz.km. Thus the step 92 of selecting optical fibers in which the modal bandwidth is less than 3150 MHz.km makes it possible to choose optical fibers for which the modal bandwidth BW when the optical fiber is not bent is sufficiently low to compensate bending losses in a system conforming to the OM3 or OM4 standard. The optical fiber selected in this step 92 enables compensation of bending losses if the second bandwidth value bBW when the optical fiber is bent is above the threshold A.

Bending losses depend on injection conditions. 10G-BASE-S sources induce many injection conditions. Thus there are sources inducing losses much lower than the maximum values given above. The losses may be higher for use in another spectral window, for example at around 1300 nm. The threshold A depends on the maximum bending losses of the optical fiber when it is bent.

For example, for two turns of optical fiber with a bend radius of 5 mm, the second modal bandwidth value bBW is greater than 4000 MHz.km at the wavelength 850 nm. In another example, with two turns of optical fiber with a bend radius of 5 mm, the second modal bandwidth value bBW is greater than 5000 MHz.km at the wavelength 850 nm. In a further example, with two turns of optical fiber with a bend radius of 5 mm, the second modal bandwidth value bBW is greater than 6000 MHz.km at the wavelength 850 nm.

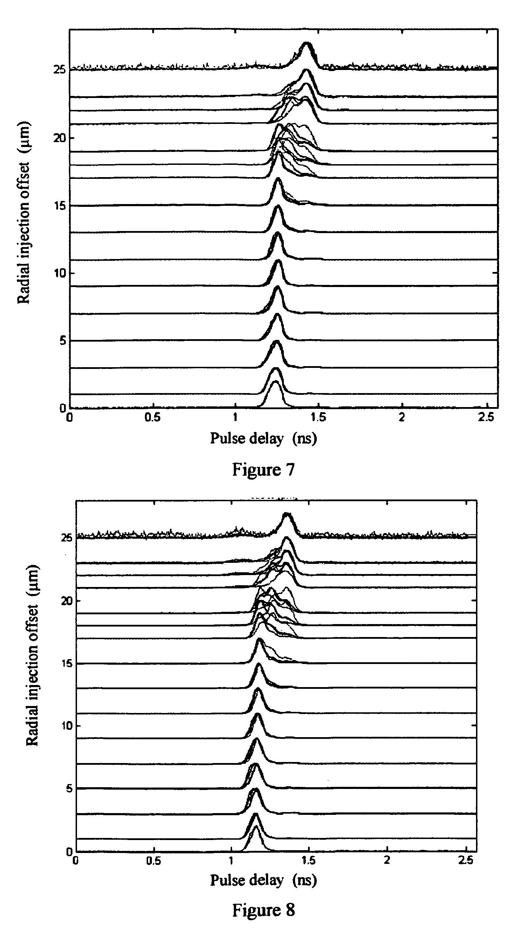

The method of the invention can be better understood after referring to Figures 7 to 9, which give DMD measurements acquired on optical fibers 1, 2, 3. Below, the bending to which the optical fibers 1, 2, 3 are subjected comprises two turns with a bend radius of 5 mm at the wavelength 850 nm.

Figure 7 gives DMD measurements acquired on a first example of optical fiber, referred to as optical fiber 1, selected by a method of the invention. If the optical fiber 1 is not bent it has a calculated effective modal bandwidth (EMBc) equal to 2600 MHz.km. If the optical fiber 1 is bent it has a calculated effective modal bandwidth (bEMBc) equal to 4440 MHz.km. For radial offsets in the range 15 $\mu$m to 25 $\mu$m the optical fiber suffers delays between higher order modes. However, if the optical fiber is bent the higher order modes are filtered. Thus the optical fiber 1 is able to compensate up to 0.9 dB of bending losses by means of its increased modal bandwidth when it is bent.

Figure 8 shows DMD measurements acquired from another example of optical fiber, referred to as optical fiber 2, selected by the method of the invention. If the optical fiber 2 is not bent it has a calculated effective modal bandwidth (EMBc) equal to 2360 MHz.km. If the optical fiber 2 is bent it has a calculated effective modal bandwidth (bEMBc) equal to 3455 MHz.km. For radial offsets in the range 15 $\mu$m to 25 $\mu$m the optical fiber suffers delays between higher order modes. However, if the optical fiber is bent the higher order modes are filtered. Thus the optical fiber 2 is able to compensate up to 0.9 dB of bending losses by means of its increased modal bandwidth when it is bent.

By way of comparison, Figure 9 shows DMD measurements acquired from an optical fiber 3 not selected by the method of the invention. If this optical fiber 3 is not bent it has a calculated effective modal bandwidth (EMBc) equal to 2340 MHz.km. If the optical fiber 3 is bent it has a calculated effective modal bandwidth (bEMBc) equal to 2440 MHz.km. For radial offsets in the range 15 $\mu$m to 25 $\mu$m, the optical fiber suffers a shorter delay between the higher order modes than optical fibers 1 and 2. The higher order modes are also filtered if the optical fiber is bent. However, the increase in the bandwidth is not sufficient to compensate  bending losses. The optical fiber 3 cannot compensate 0.2 dB of bending losses at the wavelength 850 nm.

Thus, unlike optical fiber 3, optical fibers 1 and 2 enable undegraded transmission of the optical signal when they are bent.

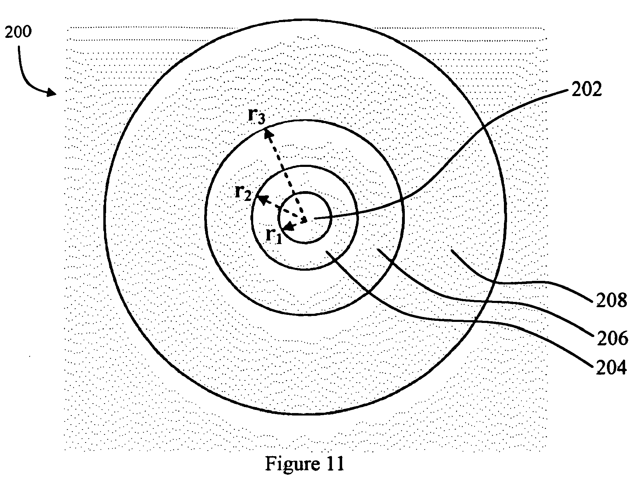

Figure 11 shows an example of multimode fiber 200 having a complex index profile. The optical fiber comprises a central core 202, an inner cladding 204 generally having a constant index profile similar to the index of the outer cladding 208, and a trench 206 having a refractive index difference $\Delta n_t$ with respect to the inner cladding 204. This refractive index difference $\Delta n_t$ may be a function of radius r where r corresponds to the radial position with respect to the center of the optical fiber.

The refractive index profile of the central core allows the creation of special guidance properties, such as for example a reduction of the intermodal dispersion. In the inner cladding 204, the trench 206 and the outer cladding 208, the refractive index profile are generally substantially constant over their widths, but complex profiles may be introduced to add new functions to the optical fiber.

The central core 202 has a radius $r_1$ and transmits the optical signal. The central core 202 has the standard characteristics of a multimode optical fiber, for example an alpha-shaped profile relative to outer optical Gadding.

The optical cladding includes an inner optical cladding 204 adjacent the central core 202. The inner optical cladding has a radius $r_2$, having a difference between the radius $r_2$ of the inner cladding and the radius $r_1$ of the central core lying in the range 0.8 $\mu$m to 5 $\mu$m. This difference may be interpretted as being the thickness or width of the inner cladding. The optical cladding also includes a trench 206 adjacent the inner cladding. The trench has a radius $r_3$ as well as a volume V lying in the range -30 $\mu$m to -2 $\mu$m. The volume V is given by the following expression, in which $\Delta n_t$ is the index difference of the trench with respect to the outer cladding as a function of the radius r, wherein r corresponds to the radial position with respect to the center of the optical fiber:

$$V = \int_{r2}^{r3} \Delta n_t \times 1000 \times dr$$

The characteristics of the trench and the inner cladding make it possible to improve the bending resistance of the optical fiber. The trench has a width and a depth such that the volume of the trench has no deleterious effects on the signal transmitted via the optical fiber. Thus the trench does not disturb the bandwidth of the optical fiber. The trench is sufficiently small to prevent any significant guiding of leakage modes.

For example, the volume V of the trench is in the range -20 $\mu$m to -10 $\mu$m and the difference between the radius $r_2$ of the inner cladding and the radius $r_1$ of the central core is in the range 0.8 $\mu$m to 2 $\mu$m.

For example, the trench has a width, defined by the difference between the radius $r_3$ of the trench and the radius $r_2$ of the inner cladding, mathematically expressed as $r_3$-$r_2$, in the range 2 $\mu$m to 8 $\mu$m, even in the range 3 $\mu$m to 6 $\mu$m. The depth of the trench, corresponding to the maximum index difference with respect to the outer cladding, is for example less than $-0.5 \times 10^3$, even less than $-1 \times 10^{-3}$. For example, the trench has a depth greater than $-8 \times 10^{-3}$, even greater than $-5 \times 10^{-3}$.

The trench may be of any known type, for example a single trench. In another example, the trench is a composite trench, i.e. it comprises a plurality of individual trenches separated from one another by inner cladding.

The optical fiber also has a modal bandwidth that depends on the bending to which the optical fiber is subjected. The value bBW of the modal bandwidth when the optical fiber is bent is above a bandwidth threshold A. The threshold A is higher than the value BW of the modal bandwidth when the optical fiber is not bent. The threshold A is a function of the value BW of the modal bandwidth when the optical fiber is not bent. The threshold A also depends on a predetermined bending loss value BL. The value BL is greater than zero and corresponds to the maximum bending losses permitted when the optical fiber is bent. Thus the optical fiber is usable in an optical system for transmitting an optical signal that is not degraded by bending.

Firstly, the trench makes it possible to reduce the bending losses of the optical fiber. For example, the trench makes it possible to limit the bending losses to approximately 1.2 dB for two turns with a bend radius of 5 mm. However, the trench is sufficiently small to avoid deleterious effects on the refractive index profile of the optical fiber. The bending losses remain sufficiently high to enable filtering of the higher order modes. For example, the bending losses are greater than 0.5 dB, preferably greater than 0.8 dB, with two turns with a bend radius of 5 mm for a signal wavelength of 850 nm.

In contrast, the bandwidth threshold A is as described with reference to the method of the invention. Thus when the optical fiber of the invention is bent, the corresponding bending losses are compensated, or even overcompensated, by an increase in the modal bandwidth. Compensation of bending losses is possible if the modal bandwidth value bBW of the optical fiber when it is bent exceeds the bandwidth threshold A.

Thus the optical fiber includes a trench that makes it possible to reduce bending losses but not to eliminate them completely. The optical fiber also has a bandwidth bBW when it is bent that makes it possible to maintain signal quality. Thus the optical fiber enables transmission of an optical signal whereby the quality of the signal, i.e. its signal-to-noise ratio, is globally insensitive to bending without the deleterious effects of a large-volume trench.

The threshold A may satisfy the following equation, in which D is a value that depends on the modal bandwidth value BW when the optical fiber is not bent and $\alpha$ is a constant:

$$A = \frac{BW}{(1 - BL \times D)^{1/\alpha}}$$

The value D may satisfy the following equation, in which F is a constant:

$$D = \frac{BW^{\alpha}}{F}$$

The threshold A may be obtained from the 10Gb/s Link Budget Spreadsheet developed by the IEEE P802.3ae 10 Gb/s Working Group. In this case, when it is bent, the optical fiber has a modal bandwidth bBW above the threshold A, with $F = 2 \times 10^8$ and $\alpha = 2.4$.

The modal bandwidth value BW when the optical fiber is not bent may be less than 3150 MKz.km at the wavelength 850 nm. Thus the optical fiber has a modal bandwidth when it is not bent that is sufficiently low for it to be used in a system conforming to the OM3 or OM4 standards.

The value of the threshold A is a function of the maximum bending losses when the optical fiber is bent.

For example, with two turns of optical fiber with a bend radius of 5 mm, the bandwidth threshold A is greater than 4000 MHz.km at the wavelength 850 nm. In another example, with two turns of optical fiber with a bend radius of 5 mm, the bandwidth threshold A is greater than 5000 MHz.km at the wavelength 850 nm. In a further example, with two turns of optical fiber with a bend radius of 5 mm, the bandwidth threshold A is greater than 6000 MHz.km at the wavelength 850 m.

An optical fiber obtained by the method of the invention may be used as a transmission medium in an optical system, for example a fiber to the home (FTTH) system, in particular as a transmission medium that is insensitive to bending in an optical system and suitable for short-distance networks.

An optical system comprising such an optical fiber obtained by the method of the invention may have a bit rate greater than or equal to 10 Gb/s over a source-receiver distance of at least 100 m, even at least 300 m, and even at least 550 m.

Of course, the present invention is not limited to the embodiments described above by way of example. In particular, the threshold A may be obtained from data other than that obtained from the 10 Gb/s Link Budget Spreadsheet developed by the IEEE P802.3ae 10 Gb/s Working Group.

The optical fiber selected by the invention may be installed in numerous transmission systems with good compatibility with other optical fibers of the system.

**Claims**

**1.** A method of selecting from a plurality of multimode optical fibers one or more multimode optical fibers in which respective modal bandwidths depend on the bending to which the fibers are subjected, the method comprising steps consisting in for each fiber:

> i) carrying out dispersion mode delay (DMD) measurements on the fiber when it is not bent;
> ii) determining (100) a first modal bandwidth value BW when the fiber is not bent, by weighting said DMD measurements obtained in step i) using coefficients C corresponding to when the fiber is not bent, each coefficient C corresponding to an injection radial offset; and
> iii) obtaining coefficients Cb corresponding to when the fiber is bent by modeling the DMD power distributions that would be obtained for each injection radial offset if the optical fiber were bent on basis of the DMD measurements acquired from the optical fiber when it is not bent;
> iv) determining (101) a second modal bandwidth value bBW when the fiber is bent, by weighting said DMD measurements obtained in step i) with coefficients Cb obtained in step iii) and
> v) selecting (102) the fibers for which said second value bBW obtained in step iv) is above a bandwidth threshold A, said threshold A being greater than the first value BW obtained in step ii); said threshold A being a function of said first modal bandwidth value BW and a predetermined bending losses value BL.

2. A method according to claim 1, wherein said bandwidth threshold A satisfies the following equation:

$$A = \frac{BW}{(1 - BL \times D)^{1/\alpha}}$$

where:

> · A is said bandwidth threshold;
> · BW is the first modal bandwidth value of the fiber when the fiber is not bent;
> · BL is said predetermined bending loss value;
> · D is a value that is a function of the first modal bandwidth value BW of the fiber when the fiber is not bent; and
> · $\alpha$ is a constant, preferably equal to 2.4.

3. A method according to claim 2, wherein the value D satisfies the following equation, in which F is a constant, preferably F being equal to $2 \times 10^8$:

$$D = \frac{BW^{\alpha}}{F}$$

4. A method according to any preceding claim, further including, before the step (100) of determining the first modal bandwidth value BW, a step (90) of preselecting from said plurality of fibers fibers for which the bending losses of the fiber when it is bent are above a predetermined threshold.

5. A method according to any preceding claim, wherein the bending to which the fiber is subjected consists in two turns with a radius of 5 mm.

6. A method according to claims 4 and 5, wherein at the wavelength 850 nm the bending losses are greater than 0.5 dB, preferably greater than 0.8 dB.

7. A method according to any preceding claim further including, after the step (100) of determining the first value modal bandwidth BW, a step (92) of selecting fibers for which the first modal bandwidth value BW of the fiber is less than 3150 MHz.km at the wavelength 850 nm.

8. A method according to any preceding claim, wherein said bandwidth threshold A is equal to 4000 MHz.km, preferably equal to 5000 MHz.km, more preferably equal to 6000 MHz.km at the wavelength 850 nm.

9. A method according to any preceding claim, wherein the modal bandwidth and the bending losses are respectively: either *i)* an effective modal bandwidth and bending losses under restricted injection conditions or *ii)* a bandwidth under saturated injection conditions and bending losses under saturated injection conditions.

**Patentansprüche**

1. Verfahren zum Auswählen aus mehreren Multimoden-Lichtleitfasern einer oder mehrerer Multimoden-Lichtleitfasern, in denen die jeweiligen modalen Bandbreiten von der Biegung abhängen, der die Fasern unterworfen sind, wobei das Verfahren die Schritte umfasst, die für jede Faser in Folgendem bestehen:

   i) Ausführen von Dispersionsmodus-Verzögerungsmessungen (DMD-Messungen) an der Faser, wenn sie nicht gebogen ist;
   ii) Bestimmen (100) eines ersten Wertes BW der modalen Bandbreite, wenn die Faser nicht gebogen ist, durch Gewichten der DMD-Messungen, die im Schritt i) erhalten werden, unter Verwendung von Koeffizienten C, die dem Fall entsprechen, in dem die Faser nicht gebogen ist, wobei jeder Koeffizient C einem radialen Injektionsversatz entspricht; und
   iii) Erhalten von Koeffizienten Cb, die dem Fall entsprechen, in dem die Faser gebogen ist, durch Modellieren der DMD-Leistungsverteilungen, die für jeden radialen Injektionsversatz erhalten würden, falls die optische Faser gebogen wäre, anhand der DMD-Messungen, die von der Lichtleitfaser erfasst werden, wenn sie nicht gebogen ist;
   iv) Bestimmen (101) eines zweiten Werts bBW der modalen Bandbreite, wenn die Faser gebogen ist, durch Gewichten der DMD-Messungen, die im Schritt i) erhalten werden, mit Koeffizienten Cb, die im Schritt iii) erhalten werden, und
   v) Auswählen (102) der Fasern, für die der im Schritt iv) erhaltene zweite Wert bBW über einem Bandbreitenschwellenwert A liegt, wobei der Schwellenwert A größer als der im Schritt ii) erhaltene erste Wert BW ist; wobei der Schwellenwert A eine Funktion des ersten Wertes BW der modalen Bandbreite und eines vorgegebenen Biegeverlustwertes BL ist.

2. Verfahren nach Anspruch 1, wobei der Bandbreitenschwellenwert A die folgende Gleichung erfüllt:

$$A = \frac{BW}{\left(1 - BL \times D\right)^{1/\alpha}}$$

   wobei:

   - A der Bandbreitenschwellenwert ist;
   - BW der erste Wert der modalen Bandbreite der nicht gebogenen Faser ist;
   - BL der vorgegebene Biegeverlustwert ist;
   - D ein Wert ist, der eine Funktion des ersten Wertes BW der modalen Bandbreite der nicht gebogenen Faser ist; und
   - $\alpha$ eine Konstante ist, die vorzugsweise gleich 2,4 ist.

3. Verfahren nach Anspruch 2, wobei der Wert D die folgende Gleichung erfüllt, in der F eine Konstante ist, wobei F vorzugsweise gleich $2 \times 10^8$ ist:

$$D = \frac{BW^{\alpha}}{F}.$$

4. Verfahren nach einem der vorhergehenden Ansprüche, das ferner vor dem Schritt (100) des Bestimmens des ersten Wertes BW der modalen Bandbreite einen Schritt (90) umfasst, in dem aus den mehreren Fasern im Voraus Fasern gewählt werden, für die die Biegeverluste der Faser, wenn sie gebogen ist, über einem vorgegebenen Schwellenwert liegen.

5. Verfahren nach einem der vorhergehenden Ansprüche, wobei das Biegen, dem die Faser unterworfen wird, aus zwei Biegungen mit einem Radius von 5 mm besteht.

6. Verfahren nach den Ansprüchen 4 und 5, wobei bei der Wellenlänge von 850 nm die Biegeverluste größer als 0,5 dB, vorzugsweise größer als 0,8 dB sind.

**7.** Verfahren nach einem der vorhergehenden Ansprüche, das ferner nach dem Schritt (100) des Bestimmens des ersten Wertes BW der modalen Bandbreite einen Schritt (92) des Wählens von Fasern umfasst, für die der erste Wert BW der modalen Bandbreite der Faser bei der Wellenlänge von 850 nm kleiner als 3150 MHz · km ist.

**8.** Verfahren nach einem der vorhergehenden Ansprüche, wobei der Bandbreitenschwellenwert A bei der Wellenlänge von 850 nm gleich 4000 MHz · km, vorzugsweise gleich 5000 MHz · km und besonders bevorzugt gleich 6000 MHz · km ist.

**9.** Verfahren nach einem der vorhergehenden Ansprüche, wobei die modale Bandbreite und die Biegeverluste jeweils sind: entweder i) eine effektive modale Bandbreite und Biegeverluste unter beschränkten Injektionsbedingungen oder ii) eine Bandbreite unter gesättigten Injektionsbedingungen und Biegeverluste unter gesättigten Injektionsbedingungen.

**Revendications**

**1.** Procédé de sélection, parmi une pluralité de fibres optiques multimodes, d'une ou plusieurs fibres optiques multimodales dans lesquelles une bande passante modales respective dépendent de courbures subies par les fibres, le procédé comprenant les étapes consistant, pour chaque fibre, en :

> i) l'exécution de mesures de délai de mode de dispersion (DMD) sur la fibre lorsqu'elle ne subit pas de courbures ;
> ii) la détermination (100) d'une première valeur BW de bande passante modale, lorsque la fibre ne subit pas de courbures, par pondération desdites mesures DMD obtenues à l'étape i) en utilisant des coefficients C correspondant à lorsque la fibre ne subit pas de courbures, chaque coefficient C correspondant à un décalage radial d'injection ; et
> iii) l'obtention de coefficients Cb correspondant à lorsque la fibre ne subit pas de courbures, par modélisation des distributions de puissance DMD qui seraient obtenues pour chaque décalage radial d'injection si la fibre optique subit des courbures sur la base des mesures DMD acquises à partir de la fibre optique lorsqu'elle ne subit pas de courbures ;
> iv) la détermination (101) d'une deuxième valeur bBW de bande passante modale lorsque la fibre subit des courbures, par pondération desdites mesures DMD obtenues à l'étape i) avec des coefficients Cb obtenus à l'étape iii) ; et
> v) la sélection (102) des fibres pour lesquelles ladite deuxième valeur bBW obtenue à l'étape iv) est supérieure à un seuil de largeur de bande passante A, ledit seuil A étant supérieur à la première valeur BW obtenue à l'étape ii), ledit seuil A étant une fonction de ladite première valeur de largeur de bande modale BW et d'une valeur de perte de flexion prédéterminée BL.

**2.** Procédé selon la revendication 1, dans lequel ledit seuil A de bande passante satisfait à l'équation suivante :

$$A = \frac{BW}{(1 - BLxD)^{1/\alpha}}$$

où :

> A est ledit seuil de bande passante ;
> BW est la première valeur de la bande passante modale de la fibre lorsque la fibre ne subit pas des courbures ;
> BL est ladite valeur prédéterminée de perte par courbures ;
> D est une valeur qui est une fonction de la première valeur BW de bande passante modale de la fibre lorsque la fibre ne subit pas de courbures ; et
> $\alpha$ est une constante, de préférence égale à 2,4.

**3.** Procédé selon la revendication 2, dans lequel la valeur D satisfait à l'équation suivante, où F est une constante de préférence égale à $2 \times 10^8$ :

$$D = \frac{BW'^{\alpha}}{F}.$$

**4.** Procédé selon l'une quelconque des revendications précédentes, comprenant en outre, avant l'étape (100) de détermination de la première valeur BW de bande passante modale, une étape (90) de présélection, parmi ladite pluralité de fibres, de fibres pour lesquelles les pertes par courbures de la fibre lorsqu'elle subit des courbures sont supérieures à un seuil prédéterminé.

**5.** Procédé selon l'une quelconque des revendications précédentes, dans lequel les courbures subies par la fibre consiste en deux tours avec un rayon de 5 mm.

**6.** Procédé selon les revendications 4 et 5, dans lequel, à la longueur d'onde de 850 nm, les pertes par courbures sont supérieures à 0,5 dB, de préférence supérieures à 0,8 dB.

**7.** Procédé selon l'une quelconque des revendications précédentes, comprenant en outre, après l'étape (100) de détermination de la première valeur BW de bande passante modale, une étape (92) de sélection de fibres pour lesquelles la première valeur de largeur BW de bande passante modale de la fibre est inférieure à 3150 MHz.km à la longueur d'onde de 850 nm.

**8.** Procédé selon l'une quelconque des revendications précédentes, dans lequel ledit seuil A de bande passante est égal à 4000 MHz.km, de préférence égal à 5000 MHz.km, de manière davantage préférée égal à 6000 MHz.km à la longueur de bande de 850 nm.

**9.** Procédé selon l'une quelconque des revendications précédentes, dans lequel de bande passante modale et les pertes par courbures sont respectivement : soit i) bande passante modale effective et des pertes par courbures dans des conditions d'injection restreinte, soit ii) une bande passante dans des conditions d'injection saturée et des pertes par courbures dans des conditions d'injection saturée.

Figure 1

Figure 2

Figure 3

Figure 4

Figure 5

Figure 6

Figure 7

Figure 8

Figure 9

Figure 10

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080166094 A
- WO 2008085851 A

- EP 2166386 A
- US 20090010596 A

**Non-patent literature cited in the description**

- **D. GLOGE et al.** Multimode theory of graded-core fibers. *Bell System Technical Journal,* 1973, 1563-1578
- **G. YABRE.** Comprehensive theory of dispersion in graded-index optical fibers. *Journal of Lightwave Technology,* February 2000, vol. 18 (2), 166-177

- **D. MOLIN ; P. SILLARD.** Low bending sensitivity of regular OM3/OM4 in 10-GbE applications. *Proc. Optical Fiber Communication Conference, JThA55,* 2010